# EUROPEAN PATENT SPECIFICATION

(11) **EP 3 127 674 B1**
(45) Date of publication and mention of the grant of the patent: **13.06.2018**
(21) Application number: 15180221.2
(22) Date of filing: 07.08.2015
(51) Int. Cl.: B29B 17/02

(54) **PROCESS AND A PLANT FOR OBTAINING DRY SUPER-ABSORBING POLYMER (SAP) PARTICLES FROM USED SANITARY PRODUCTS**
VERFAHREN UND ANLAGE ZUR GEWINNUNG TROCKENER SUPERABSORBIERENDER POLYMER (SAP)-TEILCHEN AUS GEBRAUCHTEN SANITÄRPRODUKTEN
PROCÉDÉ ET INSTALLATION POUR L'OBTENTION DES PARTICULES DE POLYMÈRES SUPERABSORBANTS À SEC (SAP) DE PRODUITS HYGIÉNIQUES UTILISÉS

(43) Date of publication of application: 08.02.2017
(73) Proprietor: Henderickx, Mathias Wilhelmus Maria, 6065 EX Montfort (NL)
(72) Inventor: Henderickx, Mathias Wilhelmus Maria, 6065 EX Montfort (NL)
(74) Representative: Scheltus, Irma

(56) References cited:
- CN-A- 102 225 415
- CN-Y- 201 320 550
- JP-A- 2003 200 147
- US-A- 4 298 350

## Description

The invention is directed to a process and a plant for obtaining dry super-absorbing polymer (SAP) particles from used sanitary products.
Sanitary products are for example diapers; female hygienic products, like sanitary napkins and panty liners; and adult incontinence products.
Sanitary products account for a large quantity of the garbage.
For example, a child from his birth till the age of 30 months uses approximately 6 disposable diapers a day. Each of the diapers has an average volume of 500 cubic centimeters (cc). Thus, one child produces an average of about 3000 cc of garbage a day, i.e. 21,000 cc a week and thus 1.092 cubic meters per year. There are about 50,000 diaper users per million population, so that during one day it is necessary to remove from a city of one million inhabitants 150 cubic meters of such garbage.
Nowadays, most of the sanitary products end up in landfills or are burned.

Sanitary products contain super-absorbing polymer (SAP) particles. SAP particles can absorb up to 500 times their own weight of water and are added to sanitary products to support moisture absorption by the sanitary products. The SAP particles are the most expensive component in sanitary products. Therefore, it would be advantageous to be able to recycle the SAP particles.

To reduce the amount of garbage and to reclaim reusable materials from the sanitary products it would be advantageous to recycle the sanitary products. Recycling processes for sanitary products are known.
US5292075, for example, describes a recycling process for reclaiming the used paper and plastic materials of soiled diapers and other single-use human waste collecting and/or absorbing products.
A disadvantage of this process is that the SAP particles are not recycled. The process is a wet recycling process, wherein in a washer the shredded diapers are combined with water in an industrial washing machine. The paper filler material and the gel-like acrylates, which form the SAP particles in the paper filler material, absorb a lot of water in the washer. The acrylates in the SAP particles disintegrate during the recycling process because of use of additives during the separation process. The disintegrated acrylates are removed with the water as a contaminant and the SAP particles are not recycled to be reused. During the process according to US5292075 plastic and wet paper are obtained as reusable streams. The wet paper should be dried before it can be reused.
US2009/0032626 describes the separation between fluff and plastic of diapers. According to US2009/0032626 fluff is defined as the combination of cellulose and super-absorbent polymer (SAP). According to this patent application the diapers that enter the described separation process are the defective diapers collected during diaper production. This process does not describe the recycling of used diapers. The separation between fluff and plastic is performed by subjecting the shredded diapers to a series of separation steps. The separation takes place in separation cones by using air. No water is added during separation. Two streams are obtained that can be reused, a plastic stream and a fluff stream.
A disadvantage of this process is that paper, in the form of cellulose, and SAP particles are combined in the fluff. SAP particles are not obtained as a separate stream. Plastic can be recycled, but fluff can only be reused by the diaper industry.

It is the object of the invention to provide a process that makes it possible to separate plastic, SAP particles and other components from used sanitary products as three separate streams.

The object of the invention is reached by a process for obtaining dry super-absorbing polymer (SAP) particles from used sanitary products, which sanitary products comprise a package containing therein at least one plastic sheet, wet SAP particles and other components, comprising the steps of:
a. Opening the package,
b. Subjecting the opened package to a separation in a dry mode to obtain a stream of the plastic sheets and a first mixed stream of the packages, the wet SAP particles and the other components,
c. Heating and drying the first mixed stream, to obtain a second mixed stream of the packages, the dry SAP particles and the other components,
d. Subjecting the second mixed stream to a separation to obtain a stream of the dry SAP particles and a stream of the packages and other components.

Dry SAP particles are obtained with high purity levels. The stream of dry SAP particles can be reused.
The plastic stream can also be recycled. The stream of the package and other components is obtained as a dry stream. It can, without further treatment, be recycled to the paper industry, for example for the production of cardboard.

JP2003200147 discloses a method for recovering hygienic raw materials from fouled sanitary articles. This document does not disclose steps c. and d. of the process according to the invention.

CN102225415 discloses a dry recycling process of sanitary products. However, this document is directed to the recycling of production waste, and the absorbent material therefore remains dry and un-solled.

The invention is directed to a process for obtaining dry super-absorbing polymer particles from used sanitary products. Sanitary products can be selected from diapers for children of different ages, female hygienic products and adult incontinence products. The object of the invention is to separate SAP particles from plastic and other components. It is preferred that the sanitary products are primarily incontinence products for adults and children, because these Incontinence products contain a lot of super-absorbing polymer particles.

The sanitary products comprise a package containing at least 1 plastic sheet, wet SAP particles and other components. The package surrounds the at least one plastic sheet, the wet SAP particles and other components. The package can, for example, be made of a paper-like material or a non-woven material.
The package can comprise adhesives or mechanical fastening tapes to keep the sanitary products in place. The tapes can be refastenable to allow adjusting of fit or reapplication after inspection of the sanitary product.

Within the package the sanitary product contains at least one plastic sheet, which is present as a layer in the bottom part of the package, as seen from the human body.

The plastic sheet can for instance be a polymeric film. The polymer can be chosen from, for example, polyethylene or polypropylene. The at least one plastic sheet present in the package has the function to keep the moisture within the sanitary product.

Super absorbent polymers (SAP) are polymers that can absorb and retain extremely large amounts of a liquid relative to their own mass. Water absorbing polymers, also called hydrogels, absorb water through hydrogel bonding with water molecules.
SAP particles can absorb up to 500 times their weight; which is from 30-60 times their own volume of water. When the SAP particles absorb the liquid they swell and become bigger. SAP particles are commonly made by the polymerization of acrylic acid blended with sodium hydroxide.
Other materials that are used to make super absorbent polymers are, for example, polyacrylamide copolymer, ethylene maleic anhydride copolymer, crosslinked carboxymethyl cellulose, polyvinyl alcohol copolymers, crosslinked polyethylene oxide and starch grafted copolymer of polyacrylonitrile.
Sanitary products can contain up to 50wt% of their total weight of SAP particles.

The sanitary products also comprise other components. The sanitary products have a layered construction. The package forms the outside of the sanitary product. As an example of the other components in the package, the package encloses a core structure which can be absorbent material. The at least one plastic sheet is located under the core at the bottom of the package. The main function of the core is to keep the SAP particles in place and to spread the SAP particles evenly within the sanitary product. The absorbent core structure can for instance be air-laid paper material or any other non-woven material. In general, the other components in the sanitary products are the components present in the package other than the plastic sheet and the SAP particles. The other components can also comprise urine and other human waste products.

According to step a of the process of the invention the package is opened. By opening the package is meant that (1) at least one opening is provided in the package, while retaining the shape of the package, so that the content of the package, containing the at least one plastic sheet, the wet SAP particles and the other components, can be removed from the package or (2) the sanitary product is divided into several pieces.

Opening the package, while the package retains its shape, can for example be performed by cutting or by beating the package. The package can, after opening, contain one or several openings. The opening or openings can be provided at one side or more than one side of the package. Through the openings in the opened package the content of the package can be removed during the separation step b. Preferably, only one opening is provided in the package.

Opening of the package can also mean that the sanitary product as a whole is divided into several pieces; for example by cutting or shredding. According to step a, opening can be performed by cutting the package and the content of the package into several pieces. Preferably, the sanitary product is cut into a maximum of 10 pieces, more preferably in a maximum of 5 pieces. By cutting the sanitary product not only the package, but also the contents of the package are cut into pieces. After cutting a mixture of pieces of package, pieces of plastic sheet, pieces of other components and wet SAP particles will be formed. To promote the separation after opening of the package, preferably the pieces of plastic sheet should not be smaller than 5x5 cm, more preferably not smaller than 10x10 cm. Separation will be easier when the pieces of plastic sheet are bigger, because the bigger pieces will float better on the air in the air separation unit.

According to step b of the process of the invention the opened package is subjected to separation in a dry mode. Separation in a dry mode is a separation wherein no water or other liquid is added before or during separation. The only liquid that is present during separation is the water or any other liquid that was already present in the sanitary products before those products were subjected to the separation in a dry mode. During opening of the package according to step a also no water or other liquid is added.

According to one embodiment of the invention step b comprises the steps of:
i. treating the opened package to remove content of the package, and
ii. separating in air the stream of the plastic sheets from the first mixed stream.
This embodiment is suitable when the package is provided with at least one opening while retaining the shape of the package in step a. According to step i the sanitary products with one or more openings in the package are treated in a treating unit and in the treating unit the contents of the sanitary products are removed from the package through the at least one opening in the package. Further, the package and the contents of the package are mixed and, optionally, further reduced in size. According to step i removing the content of the sanitary product can be performed by beating or cutting of the sanitary product. Preferably, beating is used to remove the content of the sanitary product. A mixture of packages, plastic sheets, other components and wet SAP particles is formed.

According to another embodiment of the invention, the sanitary product is divided into several pieces in step a and the sanitary products that are divided into several pieces can be further treated in a treating unit to mix and, optionally, to further reduce the size of the pieces of the sanitary products and to obtain a mixture of packages, plastic sheets, other components and wet SAP particles. The treatment in the treating unit may not be necessary when the pieces of the sanitary product are small enough and can be distributed easily in an air separation unit.
The separation in dry mode according to step b can be performed by separating in air the stream of the plastic sheets from the first mixed stream.
Accordingly, in some embodiments, opening is performed in step a by cutting the package and the content of the package into several pieces and the separation in dry mode according to step b is performed by separating in air the stream of the plastic sheets from the first mixed stream.
Separation can be performed in an air separation unit by evenly distributing the mixture of packages, plastic sheets, other components and wet SAP particles in an air stream. During separation in a dry mode a stream of the plastic sheets and a first mixed stream of the packages, the wet SAP particles and the other components are obtained.
Separation can be performed in the treating unit or can be performed in a separate unit. The air stream can be fed to the separation unit or can be formed by a rotating part in the unit itself. The air stream is preferably flowing from the bottom to the top of the separation unit. In the air stream the plastic sheets will flow upwards and will, in this way, be separated from the first mixed stream. An example of a separation unit is a cyclone or a separation unit, comprising a housing and a cone, as described in US2009/0032626. Also a series of these separation units can be used to perform the separation of the stream of plastic sheets and the first mixed stream.
The stream of plastic sheets is removed from the process.

According to step c of the process of the invention the first mixed stream of the packages, the wet SAP particles and the other components is heated. Heating will sterilize the first mixed stream. The first mixed stream is preferably heated to a temperature of at least 100°C, more preferably at least 105°C, most preferably a temperature of at least 110°C. Heating can be performed at a temperature of at most 200°C, preferably at most 180°C. Heating takes place during a time of 5 minutes to 5 hours, preferably during a time of 10 minutes to 3 hours, more preferably a time of 15 minutes to 2 hours.

According to step c of the process of the invention the first mixed stream is dried. Drying can be performed after heating the first mixed stream. Drying is performed at a temperature of at least 30°C, preferably at least 40°C, more preferably at least 50°C. Drying can be performed at a temperature of at most 200°C, preferably at most 180°C, more preferably at most 150°C. The drying time is between 5 minutes to 24 hours, preferably between 15 minutes and 8 hours, more preferably between 20 minutes and 5 hours. The drying time can be reduced by dividing the first mixed stream in small pieces, so that drying can take place at a lower temperature or during a shorter time.
Heating and drying can also take place during one step, when drying is performed at a temperature of at least 100 °C.
After heating and drying a second mixed stream of the packages, dry SAP particles and other components is obtained.

After heating and drying, preferably a second mixed stream is obtained with a humidity of at most 10wt%, based on the total weight of the second mixed stream. More preferably, the humidity is at most 9wt%, most preferably the humidity is at most 8wt%.

During heating and drying a vapor is obtained. It can be necessary to treat the vapor to remove ammonia and/or moisture from the vapor. Preferably, the vapor is treated to remove ammonia. Preferably, the amount of ammonia in the vapor is reduced to an amount of at most 0.5 wt%, based on the total weight of the vapor. More preferably, the amount of ammonia is reduced to at most 0.2 wt%, most preferably to at most 0.1 wt%.

According to step d of the process of the invention the second mixed stream is subjected to a separation to obtain a stream of the dry SAP particles and a stream of the packages and other components.
In an embodiment of the invention it can be necessary to add a moisture absorbing additive to the second mixed stream before subjecting the second mixed stream to the second separation step. This is done, for example, when the moisture in the second mixed stream needs to be lowered further or when the second separation step is carried out in a humid environment.
The moisture absorbing additive can for instance be chalk, lime, silica gel, cellulosic fibers and salts, for example, sodium chloride, sodium carbonate, zinc chloride, calcium chloride, potassium hydroxide and sodium hydroxide.
The second mixed stream is subjected to a second separation step, to obtain a stream of dry SAP particles and a stream of the packages and other components.
The second separation step can be performed for example in a cyclone or by sieving the second mixed stream. Preferably, the second mixed stream is sieved to obtain a stream of dry SAP particles, and a stream of the packages and other components. Preferably, the sieve has a mesh size of at most 2 mm, more preferably of at most 1.5 mm, most preferably of at most 1 mm. Sieving is preferably performed on a vibrating sieve.

The invention is also directed to a plant for obtaining dry super-absorbing polymer (SAP) particles from used sanitary products, which products comprise a package containing therein at least one plastic sheet, wet SAP particles and other components, comprising the following units:
a. A cutting unit, for opening the package,
b. A separation unit, for separating in a dry mode, a stream of plastic sheets from a first mixed stream of packages, wet SAP particles and other components,
c. A heating unit, for heating the first mixed stream to a temperature of at least 100 °C, and
d. A drying unit, for drying the first mixed stream to obtain a second mixed stream, of the packages, the dry SAP particles and the other components, and
e. A sieving unit, for sieving the second mixed stream and to obtain a stream of the dry SAP particles and a stream of the packages and other components.

The plant according to the invention comprises a cutting unit. In the cutting unit the sanitary products are cut open. The sanitary products stay in one piece or are divided into several pieces. A cutting unit comprising one or more knives can be used.

The plant according to the invention also comprises a separation unit.

In one embodiment, the separation unit comprises a treating unit for removing the content of the package and an air separation unit for separating the stream of plastic sheets from the first mixed stream. This embodiment is suitable when the package is provided with at least one opening while retaining the shape of the package by the cutting unit. In the treating unit the packages are treated to remove the content thereof. This can be done by beating the packages or by cutting the packages in smaller pieces. In the treating unit the packages and the content of the packages are moved and mixed.
When the packages are already divided into several pieces in the cutting unit, the size of the pieces can be further reduced in the treating unit or the packages and the content of the packages can be further mixed in the treating unit. Treating in the treating unit is preferably performed by a rotor. The rotor preferably comprises beating parts.
From the treating unit the mixture of packages, plastic sheets, other components and wet SAP particles can be transferred to an air separation unit and, optionally, subsequent air separation units where the separation of the plastic sheets from the first mixed stream will take place.
In another embodiment of the invention the sanitary products that are cut into several pieces are directly fed to an air separation unit.

Separation of the plastic sheets will take place in an air stream, preferably a circular air stream. Such an air stream is, for example, present in a cyclone or in a separation unit, comprising a housing and a cone, as described in US2009/0032626.The plastic sheets are moving upwards in the circular air flow.
According to a further embodiment, the separation of the plastic can also take place in the treating unit. In this unit preferably a rotor is present and by the circulating movement of the rotor, the air in the unit will get a circular flow, wherein the plastic sheets are separated. Preferably, the rotor is present in the bottom part of the unit. The rotor in the separation unit is preferably moving in a horizontal plane. The air stream with the plastic sheets is moving from the bottom to the top in a vertical direction. The plastic sheets are collected at the top of the unit.
The wet SAP particles and the other components, which are mostly also wet, will fall down in the separation unit and are collected there as a first mixed stream at the bottom of the unit. In the separation unit a first mixed stream is formed. The plant according to the invention comprises a heating unit.
In the heating unit the first mixed stream is heated to a temperature of at least 100°C. The heating unit can for instance be a moving belt.

The plant according to the invention comprises a drying unit. The drying unit can be a fluidized bed dryer, a rotary dryer, a rolling bed dryer, a conduction, a confection dryer and a belt dryer. The drying unit preferably is a belt dryer. When the drying unit is operated at a temperature of at least 100°C the heating unit and the drying unit can be combined. During drying a vapor is obtained and the plant can further comprise a treating unit, to treat the vapor to remove ammonia. The treating unit for ammonia removal can for instance be a filtration unit, a bio filtration unit, a gas-wash installation, a ventilation system or an air stripping unit. In the drying unit the first mixed stream is dried to obtain a second mixed stream.

The plant according to the invention comprises a sieving unit, wherein the second mix stream containing dry SAP particles, packages and other components is further treated. In the sieving unit the second mix stream is sieved and a stream of dry SAP particles and a stream of packages and other components are obtained. Preferably, the sieving unit is a vibrating sieve or a vibrating screen. The dry SAP particles fall through the sieve and are collected underneath the sieve as a separate stream. The packages and the other components stay on the sieve and are collected at the end of the sieve.

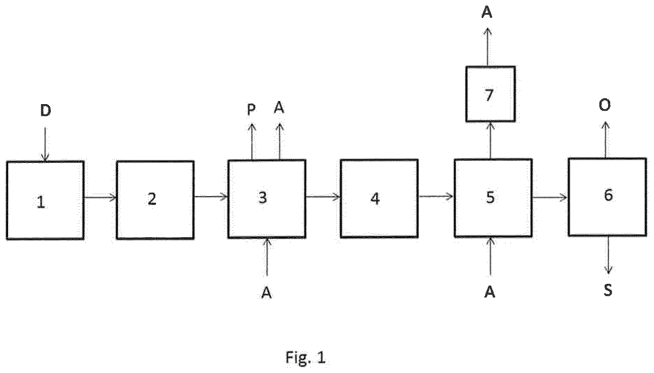

An example of a plant according to the invention is further explained according to figure 1. In figure 1 the following units are shown:
1 = a cutting unit
2 = a treating unit
3 = an air separation unit
4 = a heating unit
5 = a drying unit
6 = a sieving unit
7 = vapor treating unit

Used sanitary products (D) are fed to the cutting unit 1. The sanitary products (D) comprise a package containing therein at least one plastic sheet, wet SAP particles and other components In the cutting unit 1 at least one opening is provided in the package of the sanitary product. From the cutting unit 1 the opened packages are transported to a treating unit 2, wherein the packages are treated to remove the content thereof. From the treating unit 2 the mixture of packages, plastic sheets, other components and wet SAP particles is transferred to an air separation unit 3. Air (A) is fed to the air separation unit 3 to promote the separation of the plastic sheets (P) in the air separation unit 3. The plastic sheets (P) are collected at the top of the separation unit 3.

A first mixed stream of wet SAP particles and other components is also formed in the air separation unit 3. The first mixed stream is transported to a heating unit 4. In the heating unit the first mixed stream is heated to a temperature of at least 100 °C.

From the heating unit 4 the first mixed stream is transported to a drying unit 5 wherein the first mixed stream is dried at a temperature of at least 30 °C. Air (A) is fed to the drying unit 5. After leaving the drying unit 5 the obtained vapor is treated in a vapor treating unit 7 to remove most of the ammonia from the vapor (V).

In the drying unit 5 a second mix stream, containing dry SAP particles, packages and other components Is obtained. The second mixed stream is further treated in a sieving unit 6. In the sieving unit 6 a separation Is obtained between the dry SAP particles (S) and the packages and other components (O). The dry SAP particles (S) and the packages and other components (O) are separated and collected as two separate streams.

Although the invention has been described in detail for purposes of illustration, it is understood that such detail is solely for that purpose.

It is further noted that the term 'comprising' does not exclude the presence of other elements, However, it is also to be understood that a description on a product comprising certain components also discloses a product consisting of these components. Similarly, it is also to be understood that a description on a process comprising certain steps also discloses a process consisting of these steps.

## Claims

1. Process for obtaining dry super-absorbing polymer (SAP) particles from used sanitary products, which sanitary products comprise a package containing therein at least one plastic sheet, wet SAP particles and other components, comprising the steps of:
a. Opening the package,
b. Subjecting the opened package to a separation in a dry mode to obtain a stream of the plastic sheets and a first mixed stream of the packages, the wet SAP particles and the other components, **characterized in that** the process comprises the steps of
c. Heating and drying the first mixed stream, to obtain a second mixed stream of the packages, the dry SAP particles and the other components, and
d. Subjecting the second mixed stream to a separation to obtain a stream of the dry SAP particles and a stream of the packages and other components.

2. Process according to claim 1, wherein step b comprises the steps of:
i. treating the opened package to remove content of the package, and
ii. separating in air the stream of the plastic sheets from the first mixed stream.

3. Process according to claim 1, wherein In step a opening is performed by cutting the package and the content of the package into several pieces and the separation in dry mode according to step b is performed by separating in air the stream of the plastic sheets from the first mixed stream.

4. Process according to any one of claims 1-3, wherein in step c the first mixed stream is heated to a temperature of at least 100 °C.

5. Process according to any one of claims 1-4, wherein in step c the first mixed stream is dried at a temperature of at least 30 °C.

6. Process according to any one of claims 1-5, wherein the second mixed stream is obtained in step c with a humidity of at most 10 wt%, based on the total weight of the second mixed stream

7. Process according to any one of claims 1-6, wherein the drying time in step c is between 5 minutes to 24 hours, preferably between 15 minutes to 8 hours.

8. Process according to any one of claims 1-7, wherein the second mixed stream is mixed with a moisture-absorbing additive before feeding the second mixed stream to the separation of step d.

9. Process according to anyone of claims 1-8, wherein the separation according to step d is performed by sieving and, preferably, the sieve has a mesh size of at most 2 mm.

10. Process according to any one of claims 1-9, wherein during drying of the first mixed stream a vapor is obtained and the vapor is treated to remove ammonia to an amount of at most 0.5 wt%, based on the total weight of the vapor.

11. Plant for obtaining dry super-absorbing polymer (SAP) particles from used sanitary products, which products comprise a package containing therein at least one plastic sheet, wet SAP particles and other components, comprising the following units:
a. A cutting unit (1), for opening the package,
b. A separation unit, for separating in a dry mode, a stream of plastic sheets (P) from a first mixed stream of packages, wet SAP particles and other components,
**characterised in that** the plant further comprises
c. A heating unit (4), for heating the first mixed stream to a temperature of at least 100 °C, and
d. A drying unit (5), for drying the first mixed stream to obtain a second mixed stream, of the packages, the dry SAP particles and the other components, and
e. A sieving unit (6), for sieving the second mixed stream and to obtain a stream of the dry SAP particles (S) and a stream of the package material and other components (O).

12. Plant according to claim 11, wherein the separation unit according to step b comprises a treating unit (2) for removing the content of the package and an air separation unit (3) for separating the stream of plastic sheets from the first mixed stream.

13. Plant according to claim 11 or 12, wherein the drying unit according to step d is a belt dryer.

14. Plant according to any one of claim 11-13, wherein the sieving unit according to step e is a vibrating sieve machine.

15. Plant according to any one of claims 11-14, wherein during drying a vapor is obtained and the plant further comprising a treating unit (7) for treating the vapor to remove ammonia to an amount of at most 0.5 wt%, based on the total weight of the vapor.

## Patentansprüche

1. Verfahren zum Erhalten trockener, superabsorbierender Polymer-(SAP-) Teilchen aus benutzten Hygieneprodukten, welche Hygieneprodukte eine Verpackung, die mindestens eine Kunststofffolie, nasse SAP-Teilchen und andere Komponenten enthält, umfassen, umfassend die Schritte des:
a. Öffnens der Verpackung,
b. Unterwerfens der geöffneten Verpackung einer Trennung in einem Trockenmodus, um einen Strom der Kunststofffolien und einen ersten gemischten Strom der Verpackungen, der nassen SAP-Teilchen und der anderen Komponenten zu erhalten,
**dadurch gekennzeichnet, dass** das Verfahren die Schritte umfasst des
c. Erhitzens und Trocknens des ersten gemischten Stromes, um einen zweiten gemischten Strom der Verpackungen, der trockenen SAP-Teilchen und der anderen Komponenten zu erhalten, und
d. Unterwerfens des zweiten gemischten Stromes einer Trennung, um einen Strom der trockenen SAP-Teilchen und einen Strom der Verpackungen und anderer Komponenten zu erhalten.

2. Verfahren nach Anspruch 1, wobei der Schritt b die Schritte umfasst des:
i. Behandelns der geöffneten Verpackung, um den Inhalt der Verpackung zu entfernen, und
ii. Trennens des Stromes der Kunststofffolien von dem ersten gemischten Strom in der Luft.

3. Verfahren nach Anspruch 1, wobei in Schritt a das Öffnen durch Schneiden der Verpackung und des Inhalts der Verpackung in mehrere kleine Stücke ausgeführt wird und die Trennung im Trockenmodus Schritt b entsprechend durch Trennen des Stromes der Kunststofffolien von dem ersten gemischten Strom in der Luft ausgeführt wird.

4. Verfahren nach irgendeinem der Ansprüche 1-3, wobei in Schritt c der erste gemischte Strom auf eine Temperatur von mindestens 100 °C erhitzt wird.

5. Verfahren nach irgendeinem der Ansprüche 1-4, wobei in Schritt c der erste gemischte Strom bei einer Temperatur von mindestens 30 °C getrocknet wird.

6. Verfahren nach irgendeinem der Ansprüche 1-5, wobei der zweite gemischte Strom in Schritt c mit einer Feuchtigkeit von höchstens 10 Gew.-%, auf das Gesamtgewicht des zweiten gemischten Stromes bezogen, erhalten wird.

7. Verfahren nach irgendeinem der Ansprüche 1 - 6, wobei die Trocknungszeit in Schritt c zwischen 5 Minuten und 24 Stunden, bevorzugt zwischen 15 Minuten und 8 Stunden, liegt.

8. Verfahren nach irgendeinem der Ansprüche 1-7, wobei der zweite gemischte Strom mit einem feuchtigkeitsabsorbierenden Zusatzmittel gemischt wird, bevor der zweite gemischte Strom zur Trennung von Schritt d geführt wird.

9. Verfahren nach irgendeinem der Ansprüche 1-8, wobei die Trennung Schritt d entsprechend durch Sieben ausgeführt wird und, bevorzugt, das Siebe eine Maschengröße von höchstens 2 mm aufweist.

10. Verfahren nach irgendeinem der Ansprüche 1-9, wobei, während des Trocknens des ersten gemischten Stromes, ein Dampf erhalten wird und der Dampf behandelt wird, um Ammoniak bis zu einer Menge von höchstens 0,5 Gew.-%, auf das Gesamtgewicht des Dampfes bezogen, zu entfernen.

11. Anlage zum Erhalten trockener, superabsorbierender Polymer-(SAP-) Teilchen aus benutzten Hygieneprodukten, welche Produkte eine Verpackung, die mindestens eine Kunststofffolie, nasse SAP-Teilchen und andere Komponenten darin enthält, umfassen, umfassend die folgenden Einheiten:
a. eine Schneideeinheit (1) zum Öffnen der Verpackung,
b. eine Trennungseinheit zum Trennen in einem Trockenmodus, eines Stromes von Kunststofffolien (P) von einem ersten gemischten Strom von Verpackungen, nassen SAP-Teilchen und anderen Komponenten, **dadurch gekennzeichnet, dass** die Anlage ferner Folgendes umfasst
c. eine Erhitzungseinheit (4) zum Erhitzen des ersten gemischten Stromes auf eine Temperatur von mindestens 100 °C, und
d. eine Trocknungseinheit (5) zum Trocknen des ersten gemischten Stromes, um einen zweiten gemischten Strom der Verpackungen, der trockenen SAP-Teilchen und der anderen Komponenten zu erhalten, und
e. eine Siebeinheit (6) zum Sieben des zweiten gemischten Stromes, um einen Strom der trockenen SAP-Teilchen (S) und einen Strom des Verpackungsmaterials und anderer Komponenten (O) zu erhalten.

12. Anlage nach Anspruch 11, wobei die Trennungseinheit Schritt b entsprechend eine Behandlungseinheit (2) zum Entfernen des Inhalts der Verpackung und eine Lufttrennungseinheit (3) zum Trennen des Stromes von Kunststofffolien von dem ersten gemischten Strom umfasst.

13. Anlage nach Anspruch 11 oder 12, wobei die Trocknungseinheit Schritt d entsprechend eine Bandtrocknungsvorrichtung ist.

14. Anlage nach irgendeinem der Ansprüche 11-13, wobei die Siebeinheit Schritt e entsprechend eine Rüttelsiebmaschine ist.

15. Anlage nach irgendeinem der Ansprüche 11-14, wobei, während des Trocknens, ein Dampf erhalten wird und die Anlage ferner eine Behandlungseinheit (7) zum Behandeln des Dampfes umfasst, um Ammoniak bis zu einer Menge von höchstens 0,5 Gew.-%, auf das Gesamtgewicht des Dampfes bezogen, zu entfernen.

## Revendications

1. Processus permettant d'obtenir des particules de polymère super absorbantes (SAP) à partir de produits sanitaires utilisés, ces produits sanitaires comprennent un emballage contenant dans celui-ci au moins une feuille de plastique, des particules de SAP mouillées et d'autres composants, comprenant les étapes consistant à :
a. ouvrir l'emballage,
b. soumettre emballage ouvert à une séparation dans un mode sec pour obtenir un courant de feuille de plastique et un premier courant mélangé d'emballages, les particules de SAP mouillées et les autres composants, **caractérisé en ce que** le processus comprend les étapes consistant à
c. chauffer et sécher le premier courant mélangé, pour obtenir un second courant mélangé d'emballages, les particules de SAP sèches et les autres composants, et
d. soumettre le second courant mélangé à une séparation pour obtenir un courant de particules SAP sèches et un courant d'emballages et d'autres composants.

2. Processus selon la revendication 1, dans lequel l'étape b comprend les étapes consistant à :
i. traiter l'emballage ouvert pour éliminer le contenu de l'emballage, et
ii. séparer dans l'air le courant des feuilles de plastique provenant du premier courant mélangé.

3. Processus selon la revendication 1, dans lequel dans l'étape a l'ouverture est effectuée par la découpe de l'emballage et du contenu de l'emballage en de multiples morceaux, et la séparation en mode sec selon l'étape b est effectuée par séparation dans l'air du courant des feuilles de plastique provenant du premier courant mélangé.

4. Processus selon l'une quelconque des revendications 1 à 3, dans lequel dans l'étape c le premier courant mélangé est chauffé à une température d'au moins 100°C.

5. Processus selon l'une quelconque des revendications 1 à 4, dans lequel dans l'étape c le premier courant mélangé est séché à une température d'au moins 30°C.

6. Processus selon l'une quelconque des revendications 1 à 5, dans lequel le second courant mélangé est obtenu dans l'étape c avec une humidité d'au moins 10 % en poids, sur la base du poids total du second courant mélangé.

7. Processus selon l'une quelconque des revendications 1 à 6, dans lequel le temps de séchage dans l'étape c est compris entre 5 minutes et 24 heures, de préférence entre 15 minutes et 8 heures.

8. Processus selon l'une quelconque des revendications 1 à 7, dans lequel le second courant mélangé et mélangé avec un additif absorbant l'humidité avant l'alimentation du second courant mélangé vers la séparation de l'étape d.

9. Processus selon l'une quelconque des revendications 1 à 8, dans lequel la séparation selon l'étape d est effectuée par criblage et, de préférence, le tamis possède une taille de maille d'au plus 2 mm.

10. Processus selon l'une quelconque des revendications 1 à 9, dans lequel pendant le séchage du premier courant mélangé une vapeur est obtenue et la vapeur est traitée pour éliminer l'ammoniaque en une quantité d'au plus 0,5 % en poids, sur la base du poids total de la vapeur.

11. Usine permettant d'obtenir des particules de polymère super absorbantes (SAP) à partir de produits sanitaires utilisés, ces produits comprennent un emballage contenant dans celui-ci au moins une feuille de plastique, des particules de SAP mouillées et d'autres composants, comprenant les unités suivantes :
a. Une unité de découpe (1) permettant d'ouvrir l'emballage,
b. Une unité de séparation permettant de séparer dans un mode sec, un courant de feuilles de plastique (P) provenant d'un premier courant mélangé d'emballages, de particules de SAP mouillées et d'autres composants,
**caractérisée en ce que** l'usine comprend en outre
c. Une unité de chauffage (4) permettant d'échauffer le premier courant mélangé à une température d'au moins 100°C, et
d. Une unité de chauffage (5) permettant de sécher le premier courant mélangé pour obtenir un second courant mélangé, des emballages, les particules de SAP sèches et d'autres composants, et
e. Une unité de criblage (6) permettant de cribler le second courant mélangé et d'obtenir un courant des particules de SAP sèches (S) et un courant du matériau d'emballage et d'autres composants (O).

12. Usine selon la revendication 11, dans laquelle l'unité de séparation selon l'étape b comprend une unité de traitement (2) permettant d'éliminer le contenu de l'emballage et unité de séparation d'air (3) permettant de séparer le courant de feuille de plastique provenant du premier courant mélangé.

13. Usine selon la revendication 11 ou la revendication 12, dans laquelle l'unité de séchage selon l'étape d consiste en un sécheur à bande.

14. Usine selon l'une quelconque des revendications 11 à 13, dans laquelle l'unité de criblage selon l'étape e consiste en une machine de tapissage vibrante.

15. Usine selon l'une quelconque des revendications 11 à 14, dans laquelle pendant le séchage une vapeur est obtenue et l'usine comprenant en outre une unité de traitement (7) permettant de traiter la vapeur pour éliminer l'ammoniaque en une quantité d'au plus 0,5 % en poids, sur la base du poids total de la vapeur.
